Europäisches Patentamt

European Patent Office

Office européen des brevets

(11) Veröffentlichungsnummer: **0 140 105**
**B1**

(12) # EUROPÄISCHE PATENTSCHRIFT

(45) Veröffentlichungstag der Patentschrift:
16.12.87

(51) Int. Cl.⁴: **B 01 J 13/02**

(21) Anmeldenummer: 84110948.1

(22) Anmeldetag: 13.09.84

(54) **Verkapselte, in Wasser schwerlösliche Salze, ihre Herstellung und ihre Verwendung.**

(30) Priorität: 17.09.83 DE 3333654

(43) Veröffentlichungstag der Anmeldung:
08.05.85 Patentblatt 85/19

(45) Bekanntmachung des Hinweises auf die Patenterteilung:
16.12.87 Patentblatt 87/51

(84) Benannte Vertragsstaaten:
AT BE CH DE FR GB IT LI NL

(56) Entgegenhaltungen:
EP-A-0 041 210
DE-A-2 242 910
DE-A-2 311 712
DE-A-2 312 059
DE-A-2 404 538
DE-A-2 557 407
DE-A-2 757 017

(73) Patentinhaber: **CASSELLA Aktiengesellschaft,
Hanauer Landstrasse 526, D-6000 Frankfurt am
Main 61 (DE)**

(72) Erfinder: **Greiner, Ulrich, Dr., Nidderauerstrasse 13,
D-6369 Schöneck 1 (DE)**
Erfinder: **Keil, Karl- Heinz, Dr., Lübecker Weg 3,
D-6450 Hanau- Mittelbuchen (DE)**
Erfinder: **Heinrich, Rudolf, Dr., Taunusstrasse 19,
D-6233 Kelkheim (DE)**
Erfinder: **Albrecht, Konrad, Dr., Sodenerstrasse 64,
D-6233 Kelkheim (DE)**

(74) Vertreter: **Urbach, Hans- Georg, Dr., Hanauer
Landstrasse 526, D-6000 Frankfurt am Main 61 (DE)**

EP 0 140 105 B1

## Beschreibung

Die vorliegende Erfindung betrifft in Wasser schwerlösliche Salze organischer oder anorganischer S, die mit einer druckbeständigen, elastischen und abriebfesten Polyurethan-Polyharnstoff-Hülle umgeben sii

Die Technik der Mikroverkapselung hat in den letzten Jahren zunehmend an Bedeutung gewonnen, da diese Methode ermöglicht, reaktive oder aggressive Stoffe unterschiedlicher Aggregatzustände in ein nichtreaktive, inerte Kapsel einzuschließen. Zahlreiche mechanische und chemische Verfahren zur Kapselherstellung wurden bereits beschrieben and angewandt (vgl. hierzu: I.E. Vandegaer, "Microencapsulation"; Plenum-Press, New York-London; 1974). Mikrokapseln sind inzwischen als Träger für vielerlei verschiedene Stoffe, wie z. B. Tinten und Farbstoffe, Geruchs- oder Geschmacksstoffe, pharmazeutische Zubereitungen, chemische Reagenzien, Pflanzenschutzmittel u.s.w. eingesetzt worden.

Von besonderer Bedeutung ist z. B. die Verkapselung von toxischen Substanzen vom Standpunkt der Handhabungssicherheit. Ein weiterer Vorteil der Wirkstoffverkapselung liegt in der Kombinierbarkeit miteinander nicht mischbarer oder untereinander unverträglicher Wirkstoffe. Ebenso vorteilhaft kann die Wirkstoffverkapselung zur Verminderung der Geruchsbelästigung bei geruchsintensiven Wirkstoffen sein. Ein weiterer wichtiger Vorteil der Verkapselung besteht darin, daß dadurch eine zeitlich und mengenmäßig gesteuerte Freigabe des Wirkstoffes zu erreichen ist (Depotwirkung). Durch diesen "slow-release"-Effekt kann der Wirkstoff besser genutzt, die Zahl der erforderlichen Applikationen eingeschränkt und damit die Gesamtmenge an aufzuwendendem Wirkstoff reduziert werden.

Es ist bereits bekannt, aus Di- oder Polyisocyanaten oder deren Präpolymeren, mit Di- oder Polyaminen als Kettenverlängerungskomponenten, Polyharnstoffe herzustellen und diese Reaktion für die Herstellung von Mikrokapseln zu nutzen.

Aus der DE-B 1 519 853 ist die Herstellung von ölhaltigen Kapseln aus einer niedermolekularen, Isocyanatgruppen enthaltenden hydrophoben Phase und einer Wasser, Diole oder Amine enthaltenden hydrophilen Phase bekannt. Die dabei entstehenden Kapseln weisen eine sehr geringe Wandstärke auf und sind daher für den praktischen Einsatz nicht ausreichend mechanisch stabil. Auch das dort beschriebene Verfahren selbst weist erhebliche Nachteile auf. Da die Erzeugung der Kapseln auf dem Prinzip der Koazervatbildung beruht, ist es für die einwandfreie Durchführung des Verfahrens unbedingt notwendig, die Parameter pH-Wert, Temperatur und Viskosität innerhalb geringer Toleranzgrenzen genau einzuhalten. Außerdem ist die bei diesem Verfahren erforderliche Anwendung von niedrigmolekularen, reaktiven polyfunktionellen Verbindungen wie Polyisocyanaten und Chloriden von mehrbasischen Carbonsäuren sehr von Nachteil. Carbonsäurechloride können bei unsachgemäßer Ausführung des Verfahrens Salzsäure entwickeln, die mit dem Kapselinhalt unerwünschte Reaktionen geben kann. Polyisocyanate müssen wegen ihrer extrem hohen Reaktivität, insbesondere gegenüber dem Lösungsmittel Wasser, sehr sorgfältig gehandhabt werden.

In der DE-B 1 817 316 wird daher eine zusätzliche Verstärkung der Kapselwände durch mehrschichtigen Aufbau beschrieben. Dieses in mehreren Stufen verlaufende Verfahren ist langwierig und führt ebenfalls zu Kapselwänden, nach deren Beschädigung die eingeschlossene Wirksubstanz unverzüglich und vollständig freigesetzt wird.

Die DE-B 2 043 556 beschreibt ein Verfahren zur Herstellung von Mikrokapseln, bei dem die in Öltröpfchen enthaltenen filmbildenden Materialien an die Oberfläche dieser Öltröpfchen wandern und dort zum Aufbau des Wandmaterials führen. Auch diese Kapseln sind, ähnlich wie die nach der DE-A 2 109 335 erhaltenen, mechanisch wenig stabil und relativ druckempfindlich.

Die DE-A 2 242 910 sowie die DE-A 2 251 381 beschreiben druckempfindliche Mikrokapseln für Durchschreibepapiere, die durch Reaktion von Polyaminen mit Isocyanat-Präpolymeren hergestellt werden.

Gemäß DE-A 2 311 712 wird ein Kapselmaterial durch Umsetzung von Diolen oder Polyolen mit Phosgen oder von Di-oder Polyisocyanat mit Polyaminen, Polyestern, Polyäthern, Polyacetalen oder Polyolen erzeugt. Diese Kapseln sind relativ druckempfindlich und sehr dünnwandig. In gleicher Weise wird in der DE-A 2 312 059 ein Verfahren zur Herstellung von Polyharnstoff-Kapseln mit extrem dünnen Wänden beschrieben.

In der DE-A 2 404 538 ist ein kontinuierlich arbeitendes Verfahren zur Herstellung eines Polyurethan/Polyharnstoff-Pulvers durch Grenzflächenpolyaddition beschrieben. Diese Teilchen, die auch andere Substanzen eingeschlossen enthalten können, werden durch Versprühen eines Polyisocyanats oder eines Präpolymeren in eine aus gasförmigem Di- oder Polyamin bestehende Phase erhalten. Die Grenzflächen-Polyaddition zum Polyurethan-Polyharnstoff erfolgt hier in der Flugphase des zerstäubten Isocyanats bzw. Isocyanat-Präpolymeren. Es ist auch ein weiteres Verfahren bekannt (DE-A 25 57 407), nach dem Polyurethan/Polyharnstoff-Hohlperlen aus einem Polyisocyanat oder einem Isocyanatpräpolymeren durch Polyaddition mit einem Di- bzw. Polyamin in der Gasphase erzeugt werden können, deren Schale bei einer speziellen Verfahrensvariante außen aus Polyharnstoff und innen aus Polyurethan besteht.

Die DE-A 27 57 017 betrifft verkapselte Pflanzenschutzmittel, die dadurch erhalten werden, daß die Pflanzenschutzmittel zusammen mit Polyisocyanat-Präpolymeren in einer mit Wasser nicht mischbaren organischen Phase gelöst werden, sodan die organische Phase in der wäßrigen Lösung eines Schutzkolloids emulgiert wird und die Emulsion für eine gewisse Zeit gerührt wird. Hierbei reagieren überschüssige freie Isocyanatgruppen des Polyisocyanat-Präpolymeren mit dem Wasser unter Bildung von Harnstoffbrücken. Man erhält auf diese Weise druckfeste Polyurethan-Polyharnstoff-Partikel mit strukturierter Innenmasse, die die Pflanzenschutzwirkstoffe enthalten.

**0 140 105**

Die vorliegende Erfindung betrifft nun die Verkapselung von in Wasser schwer löslichen Salzen organischer oder vorzugsweise anorganischer Säuren. Es besteht häufig das Bedürfnis, in Wasser schwer lösliche Salze der Wechselwirkung mit ihrer unmittelbaren Umgebung zu entziehen, um sie einfacher oder sicherer handhaben zu können oder um sie speziellen Anwendungszwecken zuzuführen. So ist z. B. daran zu denken, schwer lösliche Salze der Blausäure vor der Reaktion mit dem Kohlendioxid der Luft zu schützen, toxische Salze in Teilchen bestimmter Größe zu fixieren, um das Stauben und damit die Kontamination der Umgebung zu verhindern oder um mit solchen Salzen an bestimmten und unter Umständen unzugänglichen Stellen chemische Reaktionen auszuführen. In vielen dieser Fälle tritt die Forderung hinzu, daß die Schutzhülle die Salze zwar gegenunbeabsichtigte Wechselwirkung mit der Umgebung schützen soll, aber im Anwendungsfall auch einen Zutritt von Reagenzien zu den unlöslichen Salzen gestatten muß. Die Schutzhüllen müssen somit eine gewisse Permeabilität aufweisen. Die Hüllen der in Wasser schwer löslichen Salze sollen aber auf der anderen Seite mechanisch möglichst stabil sein, so daß sie durch Druck, Scherkräfte oder Schüttvorgänge nicht mechanisch beschädigt oder abgerieben werden.

Es hat sich nun gezeigt, daß verkapselte, in Wasser schwer lösliche Salze organischer oder anorganischer Säuren, bei denen die Salzpartikel von einer druckbeständigen elastischen abriebfesten Polyurethan-Polyharnstoff-Hülle umgeben sind, die gewünschten anwendungstechnischen Eigenschaften aufweisen. In den erfindungsgemäßen verkapselten, in Wasser schwer löslichen Salzen organischer oder anorganischer Säuren beträgt das Gewichtsverhältnis von Salz zu dem Polyurethananteil des Hüllenmaterials 1 zu 0,2 bis 1 zu 2,5, vorzugsweise 1 zu 0,3 bis 1 zu 0,8.

Die Polyurethan-polyharnstoff-Hülle der erfindungsgemäßen verkapselten schwerlöslichen Salze ist dadurch charakterisiert, daß sie durch Umsetzung eines 20 bis 70 Mol-%, vorzugsweise 35 bis 60 Mol%, freie Isocyanatgruppen enthaltenden Polyurethan-Präpolymeren mit 10-100%, vorzugsweise 15 - 50%, der äquivalenten Menge eines Di- oder Polyamins aufgebaut wurde. Isocyanatgruppenhaltige Polyurethan-Präpolymere, wie sie den erfindungsgemäß einzusetzenden Kapselmaterialien zugrundeliegen, sind an sich bekannt. Sie werden erhalten durch Umsetzung von Diolen und Polyolen mit 3 bis 6, vorzugsweise 3 bis 4, OH-Gruppen und Di-oder Polyisocyanaten, vorzugsweise Di-, Tri- oder Tetraisocyanaten, insbesondere aber Diisocyanaten, wobei die Molverhältnisse zwischen den OH-gruppenhaltigen Bausteinen und den isocyanatgruppenhaltigen Bausteinen so gewählt werden, daß die Isocyanat-Gruppen im Überschuß vorliegen.

In den den erfindungsgemäß einzusetzenden Kapselmaterialien zugrundeliegenden Polyurethanen-Präpolymeren liegt das Verhältnis von Diol-Komponenten zu Polyol-Komponenten zwischen 1 zu 0 und 1 zu 3, vorzugsweise 1 zu 0 bis 1 zu 2. Für den Fall, daß Polyisocyanate in das Polyurethan-Präpolymere eingebaut werden sollen, wählt man ein Molverhältnis von Di- zu Polyisocyanat von 1 : 0,1 bis 1: 1.

Die Kohlenwasserstoffreste der Diol- und Polyolbausteine sind aliphatisch oder cycloaliphatisch und weisen 2 bis 10, vorzugsweise 2 bis 6 Kohlenstoffatome auf. Die Diol-Bausteine können sich auch ganz oder teilweise von Dihydroxypolyäthern (Polyalkylenglycolen) ableiten. Solche Polyalkylenglycole sind Polymerisate von Alkylenoxiden, wie Ethylenoxid und Propylenoxid sowie Copolymerisate von Ethylenoxid und Propylenoxid. Sie weisen in den einzelnen Alkylenresten 2 - 4 C-Atome auf und enthalten 9 bis 70, vorzugsweise 10 bis 25, Alkylenoxideinheiten, was z. B. für das Polyethylenglycol Molgewichten von ca. 400 bis ca. 3000, vorzugsweise ca. 440 bis 1100, entspricht.

Die Kohlenwasserstoffreste der Di- und Polyisocyanate können ebenfalls aliphatisch oder cycloaliphatisch sein, sie können jedoch auch aromatisch sein. Aliphatische Kohlenwasserstoffreste haben 1 bis 8, vorzugsweise 1 bis 6 Kohlenstoffatome, aromatische oder cycloaliphatische oder araliphatische Reste weisen in der Regel 6 bis 10 Kohlenstoffatome auf.

Die den erfindungsgemäß einzusetzenden Kapselmaterialien zugrundeliegenden Polyurethan-Präpolymeren enthalten pro Äquivalent Di- oder Polyol, 1,1 bis 2, vorzugsweise 1,2 bis 1,8 Äquivalente Di- und Polyisocyanate. Das Äquivalentgewicht ist hierbei gegeben als das Molekulargewicht dividiert durch die Anzahl der im Molekül enthaltenen funktionellen Gruppen, d. h. bei Di- und Polyolen Molgewicht geteilt durch Anzahl der OH-Gruppen des Moleküls und bei den Di- und Polyisocyanaten Molgewicht geteilt durch die Anzahl der Isocyanatgruppen des Moleküls.

Eine weiter erhöhte Elastizität und Widerstandsfähigkeit weisen erfindungsgemäße Kapselmaterialien auf, die noch 5 bis 20 Gew.% bekannter externer Elastifizierungsmittel enthalten, wie sie auf dem Gebiet der Polymertechnik Anwendung finden. Elastifizierungsmittel, die in den erfindungsgemäßen Kapselmaterialien enthalten sein können, sind beispielsweise in "Römpps Chemie Lexikon", 7. Auflage, (1977), Band 6, S. 3893 ff., beschrieben. Beispiele sind Dialkyl- und Diisoalkylphthalate mit längerkettigem Alkanolrest, acyclische, aliphatische Dicarbonsäureester mit längerkettigen Alkanolresten, Polymer-Weichmacher auf Basis von Polyestern, Phosphorsäureester, Fettsäureester und Epoxidweichmacher.

Die erfindungsgemäß verkapselten Salze können sich von organischen und anorganischen Säuren ableiten. Organische Säuren sind beispielsweise die schwerlösliche Salze bildenden aromatischen, vorzugsweise höheren aliphatischen Carbonsäuren, insbesondere solche mit mehr als 5 Kohlenstoffatomen, wie beispielsweise Laurinsäure, Palmitinsäure, Stearinsäure, Ölsäure, ferner organische Sulfonsäuren. Vorzugsweise leiten sich die Salze jedoch von anorganischen Säuren, wie beispielsweise Kohlensäure, Phosphorsäure, Salzsäure, Schwefelsäure, Flußsäure oder komplexen Säuren wie $H_2SiF_6$, $H_3AlF_6$, und $H_2SiO_3$, ab. Als Kationen liegen in den erfindungsgemäß verkapselten schwer löslichen Salzen die Erdalkalimetalkationen, Magnesium, Calcium, Strontium, Barium, bei den komplexen anorganischen Säuren auch noch die Alkalimetallkationen, insbesondere Lithium, Natrium und Kaliumkationen vor.

3

Besonders erwähnt seien Erdalkalisulfate und Carbonate, Lithiumcarbonat, Kalziumstearat; besonders bevorzugt sind Kalziumsulfat, $CaSiF_6$, $Na_3AlF_6$, $K_3AlF_6$, $Li_3AlF_6$, Kalziumsilikat und Kalziumfluorid.

Die erfindungsgemäßen verkapselten, in Wasser schwer löslichen Salze bilden Teilchen, die hohe Elastizität und hohe Abriebfestigkeit aufweisen. Die Größenverteilung der Teilchen liegt zwischen 5 mm und 0,005 mm, vorzugsweise im Bereich von 0,5 mm bis 0,01 mm.

Die Herstellung der erfindungsgemäßen verkapselten, in Wasser schwer löslichen Salze erfolgt in der Weise, daß eine gegebenenfalls durch Zusatz einer ausreichenden Menge eines inerten, in Wasser nicht mischbaren organischen Lösungsmittels fließfähig gemachte Mischung aus 83 bis 28 Gew.% vorzugsweise 75 bis 56 Gew.%, der zu verkapselnden Salze und 17 bis 72 Gew.%, vorzugsweise 25 bis 44 Gew.%, eines freie Isocyanatgruppen enthaltenenden Polyurethan-Präpolymeren in Gegenwart eines Schutzkolloids in Wasser emulgiert und mit 10 bis 100 % der äquivalenten Di- oder Polyaminmenge bei Temperaturen von 0 bis 80°C, vorzugsweise 10 bis 60°C, unter kräftiger Durchmischung umgesetzt wird.

Ein Polyurethan-Präpolymeres im Sinne dieser Erfindung enthält x Mol% freie Isocyanatgruppen, wenn x % der in dem als Ausgangsmaterial eingesetzten Di- oder Polyisocyanat ursprünglich vorhandenen Isocyanatgruppen nach der Umsetzung mit dem Di- oder Polyol noch frei und (100 -x)% in Urethangruppen umgewandelt worden sind.

Das zur Verkapselung eingesetzte Polyurethan-Präpolymere enthält 20 bis 70 Mol%, vorzugsweise 35 bis 70 Mol%, freier Isocyanatgruppen und weist im übrigen die weiter oben angegebene Zusammensetzung auf.

Vorzugsweise enthält die fließfähig gemachte Mischung des in Wasser schwerlöslichen Salzes und des Polyurethan-Präpolymeren das Salz in sehr feiner Verteilung. Die Feinverteilung des Salzes kann in an sich bekannter Weise z. B. durch Mahlen, aber auch vorteilhafterweise durch sehr hochtouriges Rühren, z. B. mit einem Ultra-Turrax Gerät, herbeigeführt werden.

Inerte, mit Wasser nicht mischbare organische Lösungsmittel, die für das Fließfähigmachen der Mischung aus zu verkapselndem Salz plus Polyurethan-Präpolymeres verwendet werden können, sind insbesondere aromatische Kohlenwasserstoffe, wie z. B. Benzol, Toluol, Xylol, technische Xylolgemische und wasserunlösliche Ester von niederen Alkoholen mit 1 bis 4 Kohlenstoffatomen, Glykol, Diglykol oder Triglykol sowie deren Halbäthern mit niederen aliphatischen Carbonsäuren mit 1 bis 4 Kohlenstoffatomen oder Ester von aromatischen Carbonsäuren wie Benzoesäure oder Phthalsäure, insbesondere solche mit Alkoholen mittlerer Kettenlänge. Bevorzugt sind Ester der Essigsäure mit Alkoholen von 1 bis 4 Kohlenstoffatomen, Glykol, Glykolmonomethyl- oder ethyläther, Diglykol und Diglykolmonomethyl-oder -ethyläther sowie Phthalsäureester mit Alkoholen mit 6 bis 12 C-Atomen. Besonders bevorzugt als inerte organische Lösungsmittel sind Xylol und Ethylglykolacetat (1-Ethoxy-2-acetoxy-ethan) und die genannten Phthalsäureester. Selbstverständlich können, was in manchen Fällen Vorteile bietet, auch Mischungen der obengenannten inerten mit Wasser nicht mischbaren Lösungsmittel eingesetzt werden. Die Menge des Lösungsmittels wird so bemessen, daß das Gemisch aus zu verkapselndem Salz und Polyurethan fließfähig ist, d.h. eine zumindest honigartige Konsistenz besitzt.

Als Schutzkolloide, die die Emulgierung der organischen Phase in der wäßrigen Phase unterstützen, kommen sowohl synthetische als auch natürliche Produkte in Betracht.

Solche Verbindungen sind in großer Zahl bekannt. Aus der Gruppe der synthetischen Schutzkolloide seien besonders genannt Polyvinylalkohol und Polyvinylacetat sowie nichtionische, anionische oder kationische oberflächenaktive Substanzen. Aus der Reihe natürlicher Schutzkolloide seien Biopolymere wie z. B. Gummi Arabicum, Zellulose-Derivate z. B. Carboxymethylzellulose, Hydroxyethylzellulose, ferner Alginsäuren und Alginsäurederivate genannt.

Die Schutzkolloide auf Basis synthetischer Polymeren oder von Biopolymeren werden dem Wasser in Konzentrationen von 0,1 bis 10 Gew.%, vorzugsweise 1 bis 4 Gew.% zugesetzt. Nichtionische, anionische oder kationische oberflächenaktive Mittel können in Konzentrationen von 0,1 bis 5 Gew.%, vorzugsweise 1 bis 1,5 Gew.% eingesetzt werden.

Der Zusatz der Polyurethan-Präpolymeren-Salzmischung zu der wäßrigen Phase erfolgt unter kräftiger Durchmischung unter Einsatz dafür bekannter Mittel. Insbesondere wird die Durchmischung unter Einsatz von Rühr oder Schnellrühraggregaten vorgenommen. Die Rührgeschwindigkeit liegt in diesen Fällen zwischen 100 und 5000 Umdrehungen pro Minute, vorzugsweise zwischen 200 und 2000 Umdrehungen pro Minute. Sobald das Polyurethan-Präpolymeren-Salz-Gemisch emulgiert ist, wird der wäßrigen Phase das zur Kettenverlängerung bzw. Vernetzung benutzte Di- oder Polyamin zugesetzt. Hierbei ist es nicht erforderlich, die zu den freien Isocyanatgruppen äquivalente Menge Aminogruppen einzusetzen, da das im großen Überschuß vorliegende Wasser an einer Selbstvernetzung des eingesetzten, Isocyanatgruppen enthaltenden Polyurethan-Präpolymeren mitwirkt. Zweckmäßigerweise wird daher das freie Isocyanatgruppen enthaltende Polyurethan-Polymere mit 10 bis 100%, vorzugsweise 15 bis 50%, der äquivalenten Mengen des Di- oder Polyamins umgesetzt. Bei einem durchschnittlichen Äquivalentgewicht des freie Isocyanatgruppen enthaltenden Polyurethan-Präpolymeren von 400 bis 3000 und einem Äquivalentgewicht des Di- oder Polyamins von ca. 30 bis 45 bedeutet dies, daß das Di- oder Polyamin in einer Menge von 0,1 bis 11 Gew.%, in der Praxis von 0,5 bis 5 Gew.% und vorzugsweise 0,5 bis 1,5 Gew.% der Polyurethanmenge eingesetzt wird. Di- oder Polyamine, die für die Umsetzung mit dem freie Isocyanatgruppen aufweisenden Polyurethan-Präpolymere geeignet sind, weisen $-NH_2-$ und NH-Gruppen auf, die über niedere aliphatische, zweiwertige Kohlenwasserstoffreste miteinander verbunden sind. Beispiel für solche bekannten Di- und Polyamine sind Ethylendiamin, Diethylentriamin, Diaminopropan, Dipropylentriamin, Diaminobutan, Tetraethylenpentamin, Triethylentetramin oder lineares oder verzweigtes Polyethylenimin.

Eine besonders bevorzugte Ausführungsform des Verfahrens zur Herstellung der erfindungsgemäßen verkapselten in Wasser schwer löslichen Salze besteht darin, daß man der wäßrigen Phase, in die man die Polyurethan-Präpolymeren-Salz-Mischung einfließen läßt, einen Elektrolyt zufügt. Elektrolyte, die für diesen Zweck geeignet sind, leiten sich von 1-bis 3- wertigen Metallkationen, insbesondere solchen der ersten drei Gruppen des periodischen Systems und von 1 bis 3 wertigen, vorzugsweise anorganischen Säuren ab, wobei es selbstverständlich ist, daß nur solche Kation-Anion-Kombinationen in Betracht kommen, die keine in Wasser schwer löslichen Salze ausfällen. Geeignet sind insbesondere Alkali-und Erdalkalikationen sowie Aluminium und Ammonium.

Beispiele für besonders bevorzugte Elektrolyte sind NaCl, KCl, $NH_4Cl$, $MgCl_2$, $CaCl_2$, $KAl(SO_4)_2$. Die Konzentration der Elektrolyten in der wäßrigen Phase liegt zwischen 0,25% und der Sättigungskonzentration der betreffenden Salze, höchstens bei 50%. Vorzugsweise werden 0,5 bis 30 Gew.% des Elektrolyts eingesetzt.

Nach dem bevorzugten Verfahren werden besonders hohe Ausbeuten der erfindungsgemäßen verkapselten Salze erhalten. Außerdem weisen die so erhaltenen Polyurethan-Polyharnstoff-Kapseln eine besonders günstige Kombination von mechanischer Festigkeit und selektiver Durchlässigkeit für externe Reagenzien auf.

So ist es überraschenderweise möglich trotz der hohen mechanischen Festigkeit der Kapseln durch Einwirkung stärkerer Säuren aus den erfindungsgemäßen verkapselten Salzen die entsprechenden Säuren in gezielter Weise und definierter Konzentration freizusetzen. Beispiele für solche freisetzbare Säuren sind $H_2F_2$, $H_2SiF_6$, $H_3AlF_6$, $H_2SO_4$, $H_2SiO_3$.

Die erfindungsgemäß verkapselten Salze schwerlöslicher anorganischer Säuren sind demnach in hervorragender Weise dazu geeignet, die entsprechenden Säuren bzw. ihre konjugierten Basen auf ungefährliche Weise, gezielt und mit vorherbestimmbarer Geschwindigkeit und in vorherbestimmbarer Konzentration an einer gewünschten und u. U. unzugänglichen Stelle freizusetzen. So können beispielsweise die in der Technik zum Mattätzen von Glas verwendeten aggressiven Lösungen von Flußsäure in Kombination mit Kalium-, Natrium- oder Ammoniumfluoriden sehr leicht durch ein nach Beispiel 1 hergestelltes Granulat ersetzt werden. Von besonderem Vorteil ist dabei die einfache Handhabung des staubfreien und durch die Schwerlöslichkeit des verkapselten Fluoridspenders völlig harmlosen Granulats, welches mit Hilfe einer Flüssigkeit oder eines Gasstromes auch in einer komplizierten geschlossenen Glasapparatur an einen sonst unzugänglichen Ort gespült werden kann, ohne zunächst mit dem Glas in Reaktion zu treten. Auf diese Weise bleiben alle Glasteile, die nicht geätzt werden sollen, unbeschadet. Sobald sich der verkapselte Fluoridspender an der gewünschten Stelle befindet, läßt sich durch Absenken des pH-Wertes mit z. B. HCl gezielt HF aus den Mikrokapseln freisetzen, was den Ätzvorgang einleitet.

Entsprechend kann der Ätzvorgang jederzeit durch Neutralisieren des Reaktionsmediums unterbrochen werden, ohne daß dabei die Wirksamkeit des Granulats beeinträchtigt wird. Dieses läßt sich anschließend leicht wieder aus dem Reaktionsraum herausspülen. Der Ätzprozeß läßt sich aber auch durch erneute Zugabe von HCl jederzeit wieder starten, solange noch ungelöster Fluoridspender in den Mikrokapseln vorhanden ist.

In gleicher Weise sollten die erfindungsgemäß verkapselten Salze in idealer Weise Langzeitdosierungen der in Form ihrer schwerlöslichen Salze verkapselten Säuren ermöglichen.

So kann beispielsweise die sterilisierende Wirkung von verdünnter Flußsäure in bestimmten Apparaturen für die Lebensmittelherstellung oder auch das gute Calciumbindevermögen von HF durch ein gezieltes, den Erfordernissen angepaßtes Freisetzen der Flußsäure erreicht werden, wobei die Mikroverkapselung eine enorme Erleichterung in der Handhabung gegenüber den unverkapselten pulverförmigen Salzen darstellt.

Hervorzuheben sind dabei die Unbedenklichkeit der Granulate aufgrund der Schwerlöslichkeit des verkapselten Materials, die einfache staubfreie Handhabung der rieselfähigen Ware, sowie die Druckbeständigkeit der Mikrokapseln, durch die nicht nur bei der Herstellung, sondern auch bei der Anwendung ein Zusammenbacken der Kügelchen oder ein unkrontrolliertes Freisetzen der verkapselten Salze aufgrund einer Beschädigung des Wandmaterials verhindert wird.

Erfindungsgemäß verkapselte schwerlösliche Fluoride oder Fluorokomplexe, wie z. B. Kryolith, können mit besonderem Vorteil auch zur Freisetzung von Fluoridanionen in Tiefbohrungen eingesetzt werden und haben daher eine große Bedeutung bei der Sekundär- und Tertiärförderung von Erdöl und Erdgas.

**Beispiel 1**

43 g eines Präpolymeren aus 1,6 Mol 2,4-(2,6)-Toluylen-diisocyanat und 1 Mol Polypropylenglykol Mol 1000 werden mit 120 g $Na_3AlF_6$, 10 g Diisononylphthalat und 2 g Ethylenglykolacetat unter Homogenisieren in eine stabile Dispersion überführt.

Bei einer Rührgeschwindigkeit von 200 U/Min. wird diese Dispersion innerhalb von 15 Minuten in eine Lösung aus 275 ml 25%iger NaCl-Lösung und 25 ml einer 1%igen Hydroxyethylcellulose einlaufen lassen. Dann werden 4 ml Ethylendiamin zugefügt und 5 Stunden bei Zimmertemperatur gerührt.

Ausbeute:
164 g gleichmäßig verkapseltes Produkt in Perlen- bzw. Kugelform. Größenverteilung: 0.5 - 2 mm.

### Beispiele 2

43 g eines Präpolymeren aus 1,2 Mol 2,4-Toluylen-di-isocyanat und 1 Mol Polyäthylenglykol Mol 1000 werden mit 120 g $Na_3AlF_6$, 10 g Diisooctylphthalat und 2 g Ethylglykolacetat unter Homogenisieren in eine stabile Dispersion überführt. Bei einer Rührgeschwindigkeit von 200 U/Min. wird diese stabile Dispersion in eine wäßrige Polyvinylalkohol-Lösung (1 %) eingerührt. Anschließend werden 4 ml Ethylendiamin zugefügt und 5 Stunden bei Zimmertemperatur ausgerührt.
Ausbedeutet:
128 g deutlich ungleichmäßige verkapselte Teilchen mit deformierter nicht kugelförmiger Struktur.

### Beispiel 3

400 g eines Präpolymeren aus dem Umsetzungsprodukt von 1,4 Mol 2,4-(2,6)-Toluylen-diisocyanat mit 1 Mol Polypropylenglykol mit Molgewicht 1000, das als ca. 50 %ige Lösung in Xylol vorliegt, und 600 g $CaF_2$, 50 g Diisononylphthalat, 10 g Ethylglykolacetat werden mit Hilfe eines Homogenisators in eine stabile, feinteilige Dispersion überführt und innerhalb von 10 Minuten in eine Lösung von 1640 ml 33,3 %iger NaCl-Lösung und 125 ml 1 %iger Tylose-Lösung einlaufen lassen. Anschließend werden 20 ml Ethylendiamin zugesetzt und 3 Stunden bei 20° gerührt. Die erhaltenen Kapseln werden abgetrennt, gewaschen und bei 70° C getrocknet.
Ausbeute:
685 g kugelförmiges Material hoher mechanischer Festigkeit und von Korngrößenverteilung von 0,15 - 0,6 mm.

### Beisoiel 3a

43 g eines Präpolymeren aus 1,5 Mol 2,4-(2,6)-Toluylen-diisocyanat und 1,4 Mol Polyglykol Mol 1000, das in Form einer ca. 50 %igen Lösung in Xylol eingesetzt wird, werden mit 120 g $Na_3AlF_6$, 10 g Silikonöl AL und 12 g ®Solvesso 200 (Erdölfraktion vom Siedebereich 220 bis 280° C) verrührt und anschließend in 300 g einer elektrolytfreien wäßrigen Lösung von 2 % ®Vinarol DT und 2 % ®Moviol 18 - 88 (Schutzkolloide auf Basis von Polyvinylalkohol) enthält, bei einer Rührgeschwindigkeit von 500 U/Min. in 15 Min. eingerührt. Nach 5 Minuten werden 4 ml einer 20 %igen Ethylendiaminlösung zugegeben und 40 Minuten bei 500 U/Min. weitergerührt. Die erhaltenen Perlen besitzen eine gute Struktur, lassen sich jedoch nicht isolieren, da sie auch nach längerer Ausrührzeit (4 Stunden bei 30° C) noch deformierbar sind.

Die im Beispiel 1 eingesetzten 10 g Diisononylphthalat können auch beispielsweise durch 7 g Dimethylphthalat oder 5 g Di-3,5,5-trimethylhexylphthalat oder 7,4 g Di-isononyladipat oder 9,4 g Ditridecylphthalat ersetzt werden; die 2 g Ethylenglycolacetat können beispielsweise durch 1,8 g Butylenglycolacetat oder 2,2 g Methylglycolacetat ersetzt werden; die 25 ml einer 1 %igen Lösung von Hydroxyethylcellulose können beispielsweise durch 35 ml einer 1 %igen Lösung von Hydroxypropylcellulose ersetzt werden.

In Analogie zu den Ausführungsbeispielen 1 und 3 lassen sich auch die Beispiele der folgenden Tabelle (Tabelle I) ausführen.

**Tabelle I**

| Beispiel Nr. | Isocyanat (mol) | Polyol (mol) | Freie Isocyanat-gruppen (Mol%) | Amin (Gew % bezogen auf Präpolymer) | Elektrolyt (Konzentration in der wäßrigen Phase Gew.%) | Verkapseltes Salz (Gewichtsverhältnis (Salz : Hülle) |
|---|---|---|---|---|---|---|
| 1 | Toluylendiisocyanat (1,6) | Polypropylenglycol Mol 1000 (1,0) | 58,6 | 9,3 | NaCl (25) | $Na_3AlF_6$ (1 : 0,4) |
| 3 | Toluylendiisocyanat (1,4) | Polypropylenglycol Mol 1000 (1,0) | 58,6 | 5,0 | NaCl (33,3) | CaF (1 : 0,7) |
| 4 | 4,4'-Diphenylmethandiisocyanat (1,7) | Polyethylenglycol Mol 2000 (1,0) | 70 | 10,0 | NaCl (10) | $CaF_2$ (1 : 0,6) |
| 5 | 4,4'-Diphenylmethandiisocyanat (1,2) | Polyethylenglycol Mol 800 (1,0) | 35 | 4,0 | NaCl (23) | $K_3AlF_6$ (1 : 1) |
| 6 | Hexamethylen-diisocyanat (1,5) | Polypropylenglycol Mol 1000 (1,2) | 70 | 7,5 | KCl (15) | $Na_3AlF_6$ (1 : 0,9) |
| 7 | m-Xylylendiisocyanat (1,2) | Polyethylenglycol Mol 1000 (1,0) | 50 | 7,0 | $KAl(SO_4)_2$ (2) | $CaSiF_6$ (1 : 0,4) |
| 8 | m-Xylylendiisocyanat (1,9) | Polyethylenglycol Mol 2000 (1,4) | 60 | 4,0 | NaCl (5) | $CaSiF_6$ (1 : 0,7) |
| 9 | Dianisidindiisocyanat (1,4) | Polyethylenglycol Mol 1000 (1,0) | 38 | 4,5 | $MgCl_2$ (7) | $CaSiF_6$ (1 : 0,6) |
| 10 | Dianisidindiisocyanat (1,6) | Polyethylenglycol Mol 2000 (1,1) | 40 | 1,5 | KCl (2) | $Na_3AlF_6$ (1 : 0,6) |
| 11 | Toluylendiisocyanat (1,4) | Polyethylenglycol Mol 1000 (1,0) | 60 | 0,8 | $CaCl_2$ (20) | $Li_2CO_3$ (1 : 2,5) |
| 12 | Toluylendiisocyanat (1,5) | Polyethylenglycol Mol 2000 (1,1) | 45 | 1,0 | $MgCl_2$ (14) | Calciumstearat (1 : 1,8) |
| 13 | Dianisidindiisocyanat | Polyethylenglycol | 70 | 1,4 | $NH_4Cl$ (23) | $Na_3AlF_6$ |

| | | | | | |
|---|---|---|---|---|---|
| | (1,7) | Mol 800 (1,1) | | | | (1 : 1,5) |
| 14 | Dianisidin-diisocyanat (1,6) | Polyethylenglycol Mol 1000 (1,1) | 57 | 0,75 | $CaCl_2$ (15) | Calciumstearat (1 : 0,9) |
| 15 | Hexamethylen-diisocyanat (1,4) | Polyethylenglycol Mol 1500 (1,25) | 30 | 1,5 | $KAl(SO_4)_2$ | $Li_3AlF_6$ (1 : 0,35) |
| 16 | Toluylendiisocyanat (1,3) | Polypropylenglycol Mol 2000 (1,05) | 44 | 4,8 | $MgCl_2$ (28) | $Na_3AlF_6$ (1 : 2,0) |
| 17 | Hexamethylen-diisocyanat (1,6) | Polyethylenglycol Mol 1000 (1,0) | 54 | 0,1 | $CaCl_2$ (15) | $CaF_2$ (1 : 0,75) |
| 18 | Dianisidin-diisocyanat (1,75) | Polyethylenglycol Mol 2000 (1,01) | 47 | 10,0 | $MgCl_2$ (14) | Calciumstearat (1 : 0,2) |
| 19 | 4,4'-Dinaphthylmethan-diisocyanat (1,4) | Polyethylenglycol Mol 1000 (1,0) | 36 | 4,9 | NaCl (15) | $Li_2CO_3$ (1 : 2,2) |
| 20 | Toluylendiisocyanat (1,75) | Polyethylenglycol Mol 2000 (1,2) | 72 | 4,7 | NaCl (30) | $Na_3AlF_6$ (1 : 2,0) |
| 21 | Dianisidin-diisocyanat (1,5) | Polyethylenglycol Mol 1500 (1,15) | 45 | 0,8 | $CaCl_2$ (17) | Caciumstearat (1 : 1,4) |
| 22 | Dianisidin-diisocyanat (1,4) | Polyethylenglycol Mol 1000 (1,2) | 36 | 1,1 | $MgCl_2$ (24) | $CaF_2$ (1 : 2,4) |
| 23 | 4,4',4"-Triphenylmethan-triisocyanat (1,7) | Polyethylenglycol Mol 1000 (1,0) | 70 | 0,8 | $KAl(SO_4)_2$ (15) | $Na_3AlF_6$ (1 : 0,6) |
| 24 | Butylen-1,2-diisocyanat (1,4) | Polyethylenglycol Mol 2000 (1,08) | 44 | 1,4 | NaCl (25) | $CaF_2$ (1 : 0,7) |
| 25 | Naphthalin-1,4-diisocyanat (1,35) | Polyethylenglycol Mol 800 (1,15) | 24 | 2,3 | $MgCl_2$ (19) | $Li_2CO_3$ (1 : 0,8) |
| 26 | Cyclohexy- | Polypropy- | 38 | 5 | $CaCl_2$ (5) | $Li_3AlF_6$ |

| | | | | | | |
|---|---|---|---|---|---|---|
| | len-diiso-cyanat (1,4) | lenglycol Mol 1000 (1,15) | | | | (1 : 0,2) |
| 27 | Xylylen-1,4-diisocyanat (1,4) | Polyethylen-glycol Mol 2000 (1,15) | 49 | 2 | KAl(SO$_4$)$_2$ | CaSiF$_6$ (1 : 0,2) |
| 28 | 4,4′-Diphe-nyl-propan-diisocyanat (1,6) | Polyethylen-glycol Mol 1500 (1,22) | 59 | 6,2 | NaCl (22) | Na$_3$AlF$_6$ (1 : 1,5) |

**Patentansprüche** für die Vertragsstaaten DE, BE, FR, GB, IT, NL, CH

1. Verkapselte, in Wasser schwer lösliche Salze organischer oder anorganischer Säuren, dadurch gekennzeichnet, daß die Salzpartikel von einer druckbeständigen, elastischen, abriebfesten Polyurethan-Polyharnstoff-Hülle umgeben sind, wobei das Gewichtsverhältnis von Salz zu dem Polyurethan-Anteil des Hüllmaterials 1 : 0,2 bis 1 :2,5 beträgt.

2. Verkapselte, in Wasser schwer lösliche Salze gemäß Anspruch 1, dadurch gekannzeichnet, daß Polyurethan-Polyharnstoff-Hülle durch Umsetzung eines 20 bis 70 Mol% freie Isocayanatgruppen enthaltenden Polyurethan-Präpolymeren mit 10-100% der äquivalenten Menge eines Polyamins aufgebaut wurde.

3. Verkapselte, in Wasser schwer lösliche Salze gemäß den Ansprüchen 1 und 2, dadurch gekennzeichnet, daß die Polyurethan-Polyharnstoff-Hülle durch Umsetzung eines 36 bis 60 Mol% freie Isocyanatgruppen enthaltenden Polyurethan-Präpolymeren mit 10-100% der äquivalenten Menge eines Polyamins aufgebaut wurde.

4. Verkapselte, in Wasser schwer lösliche Salze gemäß den Ansprüchen 1 bis 3, dadurch gekannzeichnet, daß es sich um in Wasser schwerlösliche Salze von Flußsäure oder Flußsäurekomplexen handelt.

5. Verfahren zur Herstellung verkapselter, in Wasser schwer löslicher Salze organischer oder anorganischer Säuren, dadurch gekannzeichnet, daß eine, gegebenenfalls durch Zusatz eines inerten, mit Wasser nicht mischbaren organischen Lösungsmittels fließfähig gemachte Mischung aus 83 bis 28 Gew.% des zu verkapselnden Salzes und 17 bis 72 Gew.% eines freie Isocyanatgruppen enthaltenden Polyurethan-Präpolymeren in Gegenwart eines Schutzkolloids in Wasser emulgiert und mit der äquivalenten Polyamin-Menge bei Temperaturen von 0 bis 80°C unter kräftiger Durchmischung umgesetzt wird.

6. Verfahren gemäß Anspruch 5, dadurch gekennzeichnet, daß das eingesetzte Polyurethan-Präpolymere 20 bis 70 Mol% freie Isocyanatgruppen enthält.

7. Verfahren gemäß den Ansprüchen 5 und 6, dadurch gekennzeichnet, daß das eingesetzte Polyurethan-Präpolymere 35 bis 60 Mol% freie Isocyanatgruppen enthält.

8. Verfahren gemäß den Ansprüchen 5 bis 7, dadurch gekennzeichnet, daß bei der Umsetzung des Polyurethan-Präpolymeren mit dem Polyamin zusätzlich ein Elektrolyt in einer Konzentration von 0,5 Gew.% bis zur Sättigungskonzentration, höchstens jedoch 50 Gew.%, anwesend ist.

9. Verfahren gemäß den Ansprüchen 5 bis 8, dadurch gekennzeichnet, daß die Umsetzung des Polyurethan-Präpolymeren mit dem Polyamin bei 10 bis 60°C durchgeführt wird.

10. Verwendung der verkapselten, in Wasser schwer löslichen Salze des Anspruchs 4 zum Ätzen von Glas.

**Patentansprüche** für den Vertragsstaat AT

1. Verfahren zur Herstellung verkapselter, in Wasser schwer löslicher Salze organischer oder anorganischer Säuren, dadurch gekennzeichnet, daß eine, gegebenenfalls durch Zusatz eines inerten, mit Wasser nicht mischbaren organischen Lösungsmittels fießfähig gemachte Mischung aus 83 bis 28 Gew.% des zu verkapselnden Salzes und 17 bis 72 Gew.% eines freie Isocyanatgruppen enthaltenden Polyurethan-Präpolymeren in Gegenwart eines Schutzkolloids in Wasser emulgiert und mit der äquivalenten Polyamin-Menge bei Temperaturen von 0 bis 80°C unter kräftiger Durchmischung umgesetzt wird.

2. Verfahren gemäß Anspruch 1, dadurch gekennzeichnet, daß das eingesetzte Polyurethan-Präpolymere 20 bis 70 Mol% freie Isocyanatgruppen enthält.

3. Verfahren gemäß den Ansprüchen 1 und 2, dadurch gekennzeichnet, daß das eingesetzte Polyurethan-Präpolymere 35 bis 60 Mol% freie Isocyanatgruppen enthält.

4. Verfahren gemäß den Ansprüchen 1 bis 3, dadurch gekennzeichnet, daß bei der Umsetzung des Polyurethan-Präpolymeren mit dem Polyamin zusätzlich ein Elektrolyt in einer Konzentration von 0,5 Gew.% bis zur Sättigungskonzentration, höchstens jedoch 50 Gew.%, anwesend ist.

5. Verfahren gamäß den Ansprüchen 1 bis 4, dadurch gekennzeichet, daß die Umsetzung des Polyurethan-Präpolymeren mit dem Polyamin bei 10 bis 60°C durchgeführt wird.

6. Verfahren gemäß den Ansprüchen 1 bis 5, dadurch gekennzeichnet, daß das zu verkapselnde Salz ein Salz der Flußsäure oder eines Flußsäurekomplexes ist.

7. Verwendung der nach Anspruch 6 hergestellten verkapselten in Wasser schwer löslichen Salze zum Ätzen von Glas.

**Claims** for the Contracting States DE, BE, FR, GB, IT, NL, CH:

1. Encapsulated salts, of sparing solubility in water, of organic or inorganic acids, characterised in that the salt particles are surrounded by a pressure-resistant, elastic, abrasion-resistant polyurethane/polyurea casing, the ratio by weight of salt to the polyurethane component of the casing material being 1:0.2 to 1:2.5.

2. Encapsulated salts, of sparing solubility in water, according to Claim 1, characterised in that the polyurethane/polyurea casing has been synthesised by reacting a polyurethane prepolymer containing 20 to 70 mole % of free isocyanate groups with 10-100 % of the equivalent amount of a polyamine.

3. Encapsulated salts, of sparing solubility in water, according to Claims 1 and 2, characterised in that the polyurethane/polyurea casing has been synthesised by reacting a polyurethane prepolymer containing 35 to 60 mole % of free isocyanate groups with 10-100 % of the equivalent amount of a polyamine.

4. Encapsulated salts, of sparing solubility in water, according to Claims 1 to 3, characterised in that they are salts, of sparing solubility in water, of hydrofluoric acid or hydrofluoric acid complexes.

5. Process for the preparation of encapsulated salts, of sparing solubility in water, of organic or inorganic acids, characterised in that a mixture which consists of 83 to 28 % by weight of the salt to be encapsulated and 17 to 72 % by weight of a polyurethane prepolymer containing free isocyanate groups and which, if necessary, has been rendered free-flowing by adding an inert, water-immiscible organic solvent, is emulsified in water in the presence of a protective colloid, and is reacted in water with the equivalent amount of polyamine at temperatures from 0 to 80°C, with vigorous mixing.

6. Process according to Claim 5, characterised in that the polyurethane prepolymer employed contains 20 to 70 mole % of free isocyanate groups.

7. Process according to Claims 5 and 6, characterised in that the polyurethane prepolymer employed contains 35 to 60 mole % of free isocyanate groups.

8. Process according to Claims 5 to 7, characterised in that, in the reaction of the polyurethane prepolymer with the polyamine, an electrolyte is additionally present in a concentration of 0.5 % by weight up to the saturation concentration, but not more than 50 % by weight.

9. Process according to Claims 5 to 8, characterised in that the reaction of polyurethane prepolymer with the polyamine is carried out at 10 to 60°C.

10. The use of the encapsulated salts, of sparing solubility in water, of Claim 4, for frosting glass.

**Claims** for the Contracting State AT

1. Process for the preparation of encapsulated salts, of sparing solubility in water, of organic or inorganic acids, characterised in that a mixture which consists of 83 to 28 % by weight of the salt to be encapsulated and 17 to 72 % by weight of a polyurethane prepolymer containing free isocyanate groups and which, if necessary, has been rendered free-flowing by adding an inert, water-immiscible organic solvent, is emulsified in water in the presence of a protective colloid, and is reacted in water with the equivalent amount of polyamine at temperatures from 0 to 80°C, with vigorous mixing.

2. Process according to Claim 1, characterised in that the polyurethane prepolymer employed contains 20 to 70 mole % of free isocyanate groups.

3. Process according to Claims 1 and 2, characterised in that the polyurethane prepolymer employed contains 35 to 60 mole % of free isocyanate groups.

4. Process according to Claims 1 to 3, characterised in that, in the reaction of the polyurethane prepolymer with the polyamine, an electrolyte is additionally present in a concentration of 0.5 % by weight up to the saturation concentration, but not more than 50 % by weight.

5. Process according to Claims 1 to 4, characterised in that the reaction of polyurethane prepolymer with the polyamine is carried out at 10 to 680°C.

6. Process according to Claims 1 to 5, characterised in that the salt to be encapsulated is a salt of hydrofluoric acid or hydrofluoric acid complexes.

7. The use of the encapsulated salts, of sparing solubility in water, prepared according to Claim 6, for frosting glass.

**Revendications** pour les Etats contractants: DE, BE, GB, IT, NL, CH

1. Sols peu solubles dans l'eau, encapsulés, d'acides organliques ou minéraux, caractérisées en ce que les particules de sel sont entourées d'une enveloppe de polyuréthanne-polyurée élastique, résistant à la compression et résistant à l'usure par abrasion, le rapport pondéral du sel à la fraction polyuréthanne de la matière de l'enveloppe se situant entre 1:0,2 et 1:2,5.

2. Sels peu solubles dans l'eau, encapsulés, selon la revendication 1, caractérisés en ce que l'enveloppe de polyuréthanne-polyurée a été obtenue par réaction d'un prépolymère de polyuréthanne, contenanat 20 à 70 moles % de groupes isocyanates libres, avec 10 à 100 % de la quantité d'équivalents d'une polyamine.

3. Sels peu solubles dans l'eau, encapsulés, selon les revendications 1 et 2, caractérisés en ce que l'enveloppe de polyuréthanne-polyurée a été obtenue par réaction d'un prépolymère de polyuréthanne contenant 35 à 60 moles % de groupes isocyanates libres avec 10 à 100 % de la quantité d'équivalents d'une polyamine.

4. Sels peu solubles dans l'eau, encapsulés, selon les revendications 1 à 3, caractérisés en ce qu'il s'agit des sels peu solubles dans l'eau de l'acide fluorhydrique ou de complexes de l'acide fluorhydrique.

5. Procédé pour préparer des sels peu solubles dans l'eau, encapsulés, d'acides organiques ou minéraux, caractérisé en ce qu'on émulsifie dans l'eau, en présence d'un colloïde protecteur, un mélange, éventuelleement fluidifié par addition d'un solvant organique inerte, non miscible à l'eau, mélange formé de 83 à 28 % en poids du sel à encapsuler et de 17 à 72 % en poids d'un prépolymère de polyuréthanne contenant les groupes isocyanates libres, et en ce qu'on fait réagir avec la quantité équivalente de polyamine à des températures de 0 à 80°C sous mélangeage intense.

6. Procédé selon la revendication 5, caractérisé en ce que le prépolymère de polyuréthanne que l'on utilise contient 20 à 70 moles % de groupes isocyanates libres.

7. Procédé selon les revendications 5 et 6, caractérisé en ce que le prépolymère de polyuréthanne que l'on utilise contient 35 à 60 moles % de groupes isocyanates libres.

8. Procédé selon les revendications 5 à 7, caractérisé en ce que, lors de la réaction du prépolymère de polyuréthanne avec la polyamine, il y a en outre un électrolyte présent en une concentration de 0,5 % en poids jusqu'à la concentration de saturation, mais au maximum de 50 % en poids.

9. Procédé selon les revendications 5 a 8, caractérisé en ce qu'on conduit la réaction du prépolymère de polyuréthanne avec la polyamine à une température de 10 à 60°C.

10. Utilisation des sels peu solubles dans l'eau, encapsulés, selon la revendication 4 pour une attaque (de gravure) du verre.

**Revendications** pour l'Etat contractant AT

1. Procédé pour préparer des sels peu solubles dans l'eau, encapsulés, d'acides organiques ou minéraux, caractérisé en ce qu'on émulsifie dans l'eau, en présence d'un colloïde protecteur, un mélange, éventuellement fluidifié par addition d'un solvant organique inerte, non miscible à l'eau, mélange formé de 83 à 28 % en poids du sel à encapsuler et de 17 à 72 % en poids d'un prépolymère de polyuréthanne contenant les groupes isocyanates libres, et en ce qu'on fait réagir avec la quantité équivalente de polyamine à des température s de 0 à 80°C, sous mélangeage intense.

2. Procédé selon la revendication 1, caractérisé en ce que le prépolymère de polyuréthanne que l'on utilise contient 20 à 70 moles % de groupes isocyanates libres.

3. Procédé selon les revendications 1 et 2, caractérisé en ce que le prépolymère de polyuréthanne que l'on utilise contient 35 à 60 moles % de groupes isocyanates libres.

4. Procede selon les revendications 1 a 3, caractérisé en ce que, lors de la réaction du prépolymère de polyuréthanne avec la polyamine, il y a en outre un électrolyte présent en une concentration de 0,5 % en poids jusqu'à la concentration de saturation, mais au maximum de 50 % en poids.

5. Procédé selon les revendications 1 à 4, caractérisé en ce qu'on conduit la réaction du prépolymère de polyuréthanne avec la polyamine à une température de 10 à 60°C.

6. Procédé selon les revendications 1 à 5, caractérisé en ce que le sel, qui doit être encapsulé, est un sel de l'acide fluorhydrique ou d'un complexe de l'acide fluorhydrique.

7. Utilisation des sels peu solubles dans l'eau, encapsulés, obtenus selon la revendication 6 pour une attaque (de gravure) du verre.